(19) Europäisches Patentamt

European Patent Office

Office européen des brevets

(11) **EP 4 102 673 A1**

(12) **EUROPEAN PATENT APPLICATION**

(43) Date of publication:
**14.12.2022 Bulletin 2022/50**

(21) Application number: **21305780.5**

(22) Date of filing: **08.06.2021**

(51) International Patent Classification (IPC):
**H02J 3/38** (2006.01)

(52) Cooperative Patent Classification (CPC):
**G06Q 10/063; H02J 3/381;** G06Q 50/06; H02J 3/32;
H02J 2203/20; H02J 2300/10; H02J 2300/20;
H02J 2300/24; H02J 2300/28; H02J 2300/40

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **TotalEnergies Renewables
92913 La Défense Cedex (FR)**

(72) Inventors:
• **BYBA, Alexandra
Paris (FR)**

• **SERVAIS, Florian
Houilles (FR)**
• **BOUTIN, Jean-Baptiste
Paris (FR)**
• **FERRAND, Patrick
Paris (FR)**
• **BACHTANIK, Adrien
Ger (FR)**

(74) Representative: **Bandpay & Greuter
30, rue Notre-Dame des Victoires
75002 Paris (FR)**

(54) **ASSESSING CARBON FOOTPRINT OF A HYBRID POWER PLANT**

(57)  It is proposed a computer-implemented method for assessing carbon footprint of a hybrid power plant. The method comprises providing one or more sets of inputs, each including a gas turbines size, a renewable power generating units size, a power demand including an electricity demand, an expected electricity production by renewable power generating units, an expected temperature value, gas turbines specifications, a quantification of a calorific capacity per unit of fuel, a quantification of a $CO_2$ emission per unit of fuel, a production duration, and an energy dispatch rule. The method further comprises computing, for each set of inputs, automatically and based on the set of inputs, a respective quantification of a carbon footprint of the power plant. The implementations comprise a base case scenario (40), where photovoltaic production and battery sizing are not taken into account, and another scenario (42), where photovoltaic production and battery sizing are taken into account.

Fig.4

**Description**

**TECHNICAL FIELD**

The disclosure relates to the field of computer programs and systems, and more specifically to a method, system and program for assessing carbon footprint of a hybrid power plant.

**BACKGROUND**

Hybrid power plants are gaining wider importance in modern power production. The demand for renewable energy and for reduction of carbon footprint tends to increase. Within this context, assessing carbon footprint of a hybrid power plant is gaining wide importance. However, there is still a need for an improved method for assessing carbon footprint of a hybrid power plant.

**SUMMARY**

It is therefore provided a computer-implemented method for assessing carbon footprint of a hybrid power plant. The method comprises providing one or more sets of inputs. Each set of inputs includes a size of gas turbines of the power plant, a size of renewable power generating units, a power demand, an expected electricity production over time by the renewable power generating units, an expected value of temperature of the power plant location over time, specifications of the gas turbines, a quantification of a calorific capacity per unit of fuel, a quantification of a CO2 emission per unit of fuel, a production duration, and an energy dispatch rule. The power demand includes a demand for electricity. The specifications include a specification of a minimum and maximum production of the gas turbines in operation, a specification representing the gas turbines efficiency as a function of the temperature, a specification representing the gas turbines efficiency as a function of the gas turbines load, and a specification representing a maximal power of the gas turbines as a function of the temperature. The method further comprises computing, for each set of inputs, automatically by a computer system and based on the set of inputs, a respective quantification of a carbon footprint of the power plant.

The method may comprise one or more of the following:

- the computing of the quantification of the carbon footprint of the plant includes:

  o determining an electrical production of the gas turbines based on the demand for electricity, on the production duration, on the size of the gas turbines, on the expected electricity production over time by the renewable power generating units and on the energy dispatch rule;
  ◦ determining an electrical production of the renewable power generating units based on the demand for electricity, on the production duration, on the size of the renewable power generating units, on the expected electricity production of the renewable power generating units, on the specification of the minimum and maximum production of the gas turbines in operation, and on the energy dispatch rule;
  ◦ determining a load of the gas turbines based on the determined electrical production of the gas turbines and on the size of the gas turbines;
  ◦ determining an efficiency of the gas turbines based on the expected evolution of temperature, on the determined load of the gas turbines, and on the specifications of the gas turbines;
  ◦ determining a thermal energy produced by the gas turbines based on the determined gas turbines efficiency and on the determined electrical production of the gas turbines;
  ◦ determining a quantification of fuel gas consumption based on the determined thermal energy produced by the gas turbines and on the quantification of the calorific capacity per unit of fuel;
  ◦ determining a quantification of $CO_2$ emission based on the determined quantification of fuel gas consumption, and on the quantification of the $CO_2$ emission per unit of fuel;

- the set of inputs further comprise:

  ◦ a size of peak-shifting batteries,
  ◦ a ramp up control of the renewable power generating units, and/or
  ◦ a spinning reserve replacement,

  and the computing of the quantification of the carbon footprint of the plant further includes:

∘ updating the size of peak-shifting batteries based on the demand for electricity, on the production duration, on the size the of renewable power generating units, on the expected electricity production of the renewable power generating units, on the size of peak-shifting batteries and on the energy dispatch rule;

∘ updating the ramp-up control based on the specification representing a maximal power of the gas turbines as a function of the temperature, on a size of the hybrid power plant, on an area of the hybrid power plant, and on an hour where the electrical production is maximal; and/or

∘ updating the spinning reserve replacement based on the specification representing a maximal power of the gas turbines as a function of the temperature, on a size of the hybrid power plant, on an area of the hybrid power plant, and on an hour where the electrical production by the gas turbines is maximal,

the determining of the electrical production of the gas turbines being further based on the determined battery sizing, the determining of the electrical production of the renewable power generating units being further based on the determined battery sizing;

- the computing of the quantification of the carbon footprint of the plant further includes:
  ∘ determining an electrical production of the batteries based on the battery sizing;
- the demand for power further includes a demand for heat, and the determining of the quantification of the fuel gas consumption is further based on a heat usable by the power plant and on the demand for heat;
- the computing of the quantification of the carbon footprint of the plant further includes:
  ∘ determining a heat retrieved by waste heat recovery units based on a specification of the waste hear recovery units,

the determining of the quantification of fuel gas consumption being based on a specification of the auxiliary heat production system;

- the computing of the quantification of the carbon footprint of the plant further includes:
  ∘ determining an auxiliary heat production system thermal energy based on the determined heat retrieved by waste heat recovery units and on the demand for heat,

the determining of the quantification of fuel gas consumption being based on the determined auxiliary heat production system thermal energy;

- wherein the providing of the specifications of the gas turbines comprises:

  ∘ providing:

    ▪ values of the gas turbines efficiency as a function of the temperature,
    ▪ values of the gas turbines efficiency as a function of the gas turbines load, and
    ▪ values of the maximal power of the gas turbines as a function of the temperature; and

  ∘ interpolating:

    ▪ the values of the gas turbines efficiency as a function of the temperature,
    ▪ the values of the gas turbines efficiency as a function of the load, and
    ▪ the values of a maximal power of the gas turbines as a function of the temperature;

- the renewable power generating units include:

  ∘ photovoltaic units, and/or
  ∘ wind turbines; and/or

- the one or more sets of inputs consist in several sets of inputs.

It is further provided a computer implemented method for upgrading a real-world power plant. The method for upgrading a real-world power plant comprises performing the method for assessing carbon footprint of a hybrid power plant, wherein the one or more sets of inputs consist in several sets of inputs, thereby computing respective quantifications of the carbon footprint of the power plant each for a respective set of inputs. The method for upgrading a real-world power plant further comprises determining, based on each computed respective quantification of the carbon footprint of the power plant, one or more renewable power generating units to be integrated each on a respective fossil power generating unit of the power plant and/or an improvement of one or more existing renewable power generating units of the power plant.

The method for upgrading a real-world power plant may further comprise, in the real-world hybrid power plant:

- integrating the determined one or more renewable power generating units each on a respective fossil power generating unit; and/or

- performing the improvement of the one or more existing renewable power generating units of the power plant.

It is further provided a computer-implemented method for designing a hybrid power plant comprising gas turbines and renewable power generating units. The method for designing a hybrid power plant comprises performing the method for assessing carbon footprint of a hybrid power plant, wherein the one or more sets of inputs consist in several sets of inputs, thereby computing respective quantifications of the carbon footprint of the power plant each for a respective set of inputs. The method for designing a hybrid power plant further comprises determining a size of the renewable power generating units of the power plant and/or a size of the gas turbines of the power plant based on each computed respective quantification of the carbon footprint of the power plant and on a net technical cost.

The method for designing a hybrid power plant may comprise one or more of the following:

- the method further comprises:

  ◦ determining, based on each computed respective quantification of the carbon footprint of the power plant and on the net technical cost, a graph representing CO2 savings depending on the size of the renewable power generating units and on the net technical cost; and
  ◦ displaying the graph,

  the determining of the size of the renewable power generating units of the power plant and/or a size of the gas turbines of the power plant being based on the graph;
- the determining of the size of the renewable power generating units of the power plant and/or the size of the gas turbines of the power plant comprises selecting, by a user, a point of the graph; and/or
- the determining of the size of the renewable power generating units of the power plant and/or a size of the gas turbines of the power plant comprises:
  ◦ automatically by a computer system, selecting, based on each computed respective quantification of the carbon footprint of the power plant, on the net technical cost, and on a criterion of maximization of $CO_2$ savings, an optimal size of the renewable power generating units of the power plant and/or an optimal size of the gas turbines of the power plant.

It is further provided a computer program comprising instructions for performing the method for assessing carbon footprint of a hybrid power plant, the method for upgrading a real-world power plant, and/or the method for designing a hybrid power plant.

It is further provided a device comprising a computer-readable data storage medium having recorded thereon the computer program.

The device may form or serve as a non-transitory computer-readable medium, for example on a SaaS (Software as a service) or other server, or a cloud based platform, or the like. The device may alternatively comprise a processor coupled to the data storage medium. The device may thus form a computer system in whole or in part (e.g. the device is a subsystem of the overall system). The system may further comprise a graphical user interface coupled to the processor.

## BRIEF DESCRIPTION OF THE DRAWINGS

Non-limiting examples will now be described in reference to the accompanying drawings, where:

- FIG.s 1 to 9 illustrate the methods; and

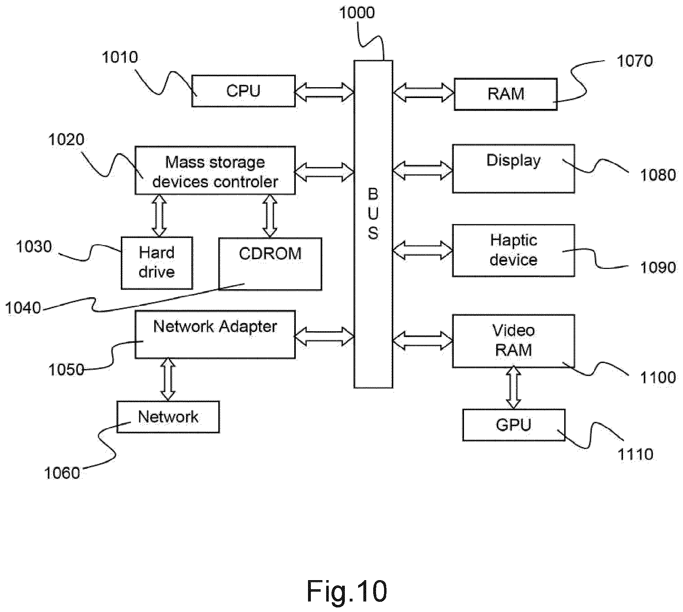

- FIG. 10 shows an example of the system.

## DETAILED DESCRIPTION

It is proposed a computer-implemented method for assessing carbon footprint of a hybrid power plant. The method comprises providing one or more sets of inputs. Each set of inputs includes a size of gas turbines of the power plant, a size of renewable power generating units, a power demand, an expected electricity production over time by the renewable power generating units, an expected value of temperature of the power plant location over time, specifications of the gas turbines, a quantification of a calorific capacity per unit of fuel, a quantification of a CO2 emission per unit of fuel, a production duration, and an energy dispatch rule. The power demand includes a demand for electricity. The specifications include a specification of a minimum and maximum production of the gas turbines in operation, a specification representing the gas turbines efficiency as a function of the temperature, a specification representing the gas turbines efficiency as a function of the gas turbines load, and a specification representing a maximal power of the gas turbines as a function of the temperature. The method further comprises computing, for each set of inputs, automatically by a computer system and based on the set of inputs, a respective quantification of a carbon footprint of the power plant. The method may be referred to as "the carbon footprint assessing method". The carbon footprint assessing method constitutes an improved method for assessing carbon footprint of a hybrid power plant.

Notably, the carbon footprint assessing method computes, for each set of inputs, a respective quantification of a carbon footprint of the power plant. Each set of input comprises objective information about the power, renewable and non-renewable, that the plant can produce, depending on weather conditions (e.g. the temperature and/or the solar irradiance), about the power generating units and their specifications, about the functioning of the power plant, about the power demand and the production duration, and about the $CO_2$ emissions and the fuel usage for production. The method computes the carbon footprint quantification based on these objective inputs, and thereby yields an objective quantification of the carbon footprint of the power plant. This objective quantification of the carbon footprint allows, e.g. in combination with a net technical cost, to take objective decisions with respect to a real-world power plant, such as upgrading a real-world power plant, or designing a hybrid power plant that may be later built in the real-world.

Furthermore, the computation of the carbon footprint quantification is carried out automatically by a computer system. This allows for a deterministic and accurate computation of the carbon footprint quantification, e.g. as opposed to ground-truth-based estimations. Furthermore, this allows a user, e.g. an engineer or a designer of the power plant, to obtain a carbon footprint quantification of the power plant without tedious efforts: the user provides the inputs, and the computer automatically computes the carbon footprint quantification. This makes the method ergonomic.

The one or more sets of inputs may consist in several sets of inputs, i.e. the method may be repeated for several sets of inputs, i.e. executed several times each time for a different set of inputs. The method may for example be automatically iterated for several sets of inputs with varying sizes of renewable power generating units and/or battery sizes, the method determining its output(s) automatically for all the set of inputs. The method may thereby assess the carbon footprint for various configurations of the plant and/or various production demands, i.e. each corresponding to a different set of inputs, and compare these various configurations one to another. This allows to determine an optimal configuration and/or to take objective decisions with respect to the power plant. The method may thereby be used in a method for upgrading (e.g. hybridizing) a real-world power plant, and/or in a method for designing a hybrid power plant.

It is notably provided a computer implemented method for upgrading a real-world power plant. The method for upgrading a real-world power plant comprises performing the carbon footprint assessing method, wherein the one or more sets of inputs consist in several sets of inputs, thereby computing respective quantifications of the carbon footprint of the power plant each for a respective set of inputs. These respective quantifications correspond to various configurations of the power plant (*e.g.* various sizes of photovoltaic units and/or wind turbines and/or gas turbines). The method for upgrading a real-world power plant further comprises determining, based on each computed respective quantification of the carbon footprint of the power plant, one or more renewable power generating units to be integrated each on a respective fossil power generating unit of the power plant and/or an improvement of one or more existing renewable power generating units of the power plant. The method for upgrading a real-world power plant may be referred to as "the power plant upgrading method".

The power plant upgrading method uses the results of the carbon footprint assessing method to upgrade a real-world power plant, *i.e.* a power plant which already exists in the real-world, based on its carbon footprint as estimated using the carbon footprint assessing method.

The power plant upgrading method may notably use the results of the carbon footprint assessing method to determine one or more renewable power generating units to be integrated each on a respective fossil power generating unit (e.g. a gas turbine) already existing in the power plant. Such a use may include a step of assessing whether or not the power plant can be connected to the appropriate power grid without problems. This assessment may comprise performing dynamical simulations based on the output(s) of the carbon footprint assessing method, for example to ensure that the grid code of the power grid is respected (otherwise, more batteries may be added). Determining one or more renewable power generating units to be integrated each on a respective fossil power generating unit may additionally or alternatively include determining a modification of one or more fossil power generating units to ensure a better integration of the one or more renewable power generating units (for example, determining a reduction of the number of gas turbines). The power plant upgrading method may then, physically in the power plant, comprise the integration of said one or more renewable power generating units each on a respective fossil power generating unit. For example, the power plant upgrading method may comprise accessing, by a user, the results of the carbon footprint method. The power plant upgrading method may then comprise the user, based on the determined quantification of carbon footprint (*e.g.* for several sets of inputs), selecting, in accordance with a set of inputs for which the plant carbon footprint is sufficiently (*e.g.* optimally, *e.g.* also with respect to a net technical cost) reduced and/or optimal (*e.g.* also with respect to a net technical cost), a number of fossil power generating units each on which a respective renewable power generating unit is to be integrated. The power plant upgrading method may then comprise (*e.g.* by the same user and/or by one or more other users, *e.g.* engineers and/or workers), physically in the power plant, equipping the selected number of fossil power generating units each with a respective renewable power generating unit.

Alternatively, the power plant upgrading method may use the results of the carbon footprint method to determine an improvement of one or more existing renewable power generating units of the power plant, e.g. a change of type and/or sizing of these units, and may then physically in the power plant, comprise the performing of this improvement. The performing of this improvement may comprise adding or removing one or more existing renewable power generating units and/or changing one or more existing renewable power generating units by one or more other renewable power generating units. For example, the power plant upgrading method may comprise accessing, by a user, the results of the carbon footprint method. The power plant upgrading method may then comprise the user, based on the determined quantification of carbon footprint (e.g. for several sets of inputs), selecting, in accordance with a set of inputs for which the plant carbon footprint is sufficiently (e.g. optimally, e.g. also with respect to a net technical cost) reduced and/or optimal (e.g. also with respect to a net technical cost), a number and/or a type of renewable power generating units for the power plant to be equipped. The power plant upgrading method may then comprise (e.g. by the same user and/or by one or more other users, e.g. engineers and/or workers), physically in the power plant, improving the current renewable power generating units installation, by performing one or more of: adding one or more new renewable power generating units, removing one or more existing renewable power generating units, and/or replacing one or more existing renewable power generating units with one or more renewable power generating units of another type.

It is also provided a computer-implemented method for designing a hybrid power plant comprising gas turbines and renewable power generating units. The method for designing a hybrid power plant comprises performing the method for assessing carbon footprint of a hybrid power plant, wherein the one or more sets of inputs consist in several sets of inputs, thereby computing respective quantifications of the carbon footprint of the power plant each for a respective set of inputs. The method for designing a hybrid power plant further comprises determining a size of the renewable power generating units of the power plant and/or a size of the gas turbines of the power plant based on each computed respective quantification of the carbon footprint of the power plant and on a net technical cost. The method for designing a hybrid power plant may be referred to as "the design method".

The design method uses the results of the carbon footprint assessing method to design a hybrid power plant, i.e. that may be later built further to the completion of the design. The design involves the determination of the size of the different units of the power plant, i.e. gas turbines and/or renewable units, based on the results of the carbon footprint assessing method and on the net technical cost. This determination may be automatic, e.g. to optimize the size of the different power generating units for maximizing $CO_2$ savings with a net technical cost constraints. Alternatively, this determination may involve a user, e.g. an engineer or a designer, performing this determination, e.g. based on a displayed graph $CO_2$ savings depending on the size of the renewable power generating units and on the net technical cost, as further discussed hereinafter. For example, the determination may comprise a user selecting, based on the graph (e.g. by clicking on a point of the graph) a size of the renewable power energy units providing optimal, or at least efficient, $CO_2$ savings with respect to the net technical cost. The design method may thus use the results of the carbon footprint assessing method to guide a user, e.g. an engineer or a designer, in the design of a real-world hybrid power plant. The design method allows a user to design the hybrid power plant, by choosing the size of the power generating units, renewable or non-renewable, with the constraint of the net technical cost. The net technical cost is an indicator of the efficiency of investment of the hybrid power plant. It captures a cost of material and in manufacturing, conception and/or installation. The net technical cost allows to avoid oversizing (which could lead to overproduction), i.e. to avoid increasing the size of power generating units in such a manner that the global efficiency of the plant to save $CO_2$ decreases. This cost captures the fact that only a limited amount of material and/or space may be available to maximize CO2 savings. For example, CO2 savings cannot in practice be maximized by always increasing the number of renewable power generating units, because it is in practice impossible to add an unlimited number of renewable power generating units in a power plant, due to space and/or material constraints. Also, the fossil power generating units may limit the size of the renewable power generating units. For example, the penetration of the PV electrical output has the limit of the site electrical consumption and the minimal power factor (i.e. real power/max power) of the gas turbines (e.g. the gas turbines work at 50% of their full capacity).The design method thus allows to balance $CO_2$ savings with the material/technical cost necessary to obtain these savings. The net technical cost may be equal to the size of the renewable power generating units minus all the benefits (e.g. the amount of fuel savings and/or Capex and Opex reduction) divided by the amount of $CO_2$ savings.

The design method may further comprise determining, based on each computed respective quantification of the carbon footprint of the power plant and on the net technical cost, a graph representing CO2 savings depending on the size of the renewable power generating units and on the net technical cost, and displaying the graph. In this case, the determining of the size of the renewable power generating units of the power plant and/or a size of the gas turbines of the power plant is based on the graph. For example, the user may select a point of the graph which represents an optimal balance between $CO_2$ savings and the net technical cost, e.g. by graphical user interaction, such as clicking on the point. The graph may be a curve that represents the variations of $CO_2$ savings depending on the size of photovoltaic units and/or wind turbines and on the technical cost (or any indicator capturing the technical cost).

Alternatively, the determining of the size of the renewable power generating units of the power plant and/or a size of the gas turbines of the power plant may comprise automatically by a computer system, selecting, based on each computed respective quantification of the carbon footprint of the power plant, on the net technical cost, and on a criterion of maximization of $CO_2$ savings, an optimal size of the renewable power generating units of the power plant and/or an optimal size of the gas turbines of the power plant. In other words, the design method may comprise an automatic selection of an optimal size of the different units of the plant, renewable or non-renewable, to balance optimally $CO_2$ savings and the net technical cost.

The carbon footprint assessing method is now further discussed.

The carbon footprint assessing method is a method for assessing the carbon footprint of a hybrid power plant. In other words, the carbon footprint assessing method outputs a quantification of a carbon footprint of the power plant, based on inputs related to the power plant. The quantification of the carbon footprint may include one or several values or quantity each quantifying the carbon footprint, as further discussed hereinafter. For that, the carbon footprint assessing method comprises the providing of one or more set of inputs. For each set of inputs, the providing may comprise retrieving at least a part (*e.g.* all) of the inputs from a (*e.g.* distant) memory or database where said at least a part is stored. Additionally or alternatively, the carbon footprint assessing method may comprise forming at least a part (*e.g.* all) of the inputs, for example by measuring them and/or processing existing data (*e.g.* including measurements).

The providing is for one or more sets of inputs, *e.g.* several sets of inputs. A single set of inputs is now discussed, but this discussion applies equally to any set of the one or more sets of inputs.

The set of inputs includes a size of gas turbines of the power plant. The size may comprise data about the number of the gas turbines and/or about the power of each gas turbine and/or about the total power of all the gas turbines altogether. The size of the gas turbines is an input that may be provided by the user, *e.g.* by graphical user interaction (*e.g.* entering the size with a keyboard) on a dedicated portion of a graphical user interface of a computer carrying out the carbon footprint assessing method. Alternatively, the user may provide this input by modifying one or more computation steps and/or functions used in the computing of the respective quantification of the carbon footprint of the power plant for the set of inputs. Yet alternatively, the size of the gas turbines may be a fixed input, *e.g.* always the same for each set of inputs.

The set of inputs further includes a size of renewable power generating units. The size may comprise data about the number of the renewable power generating units and/or about the power of each unit and/or about the total power of all the renewable power generating units altogether. The size may include a megawatt peak value for photovoltaic units and/or a wind power megawatt for wind turbines. The size of the renewable power generating units is an input that may be provided by the user, *e.g.* by graphical user interaction (*e.g.* entering the size with a keyboard) on a dedicated portion of a graphical user interface of a computer carrying out the carbon footprint assessing method. Any renewable power generating unit herein may be a photovoltaic unit (*e.g.* comprising a solar panel or a set of solar panels) or a wind turbine. The renewable power generating units of the power plant may thereby include photovoltaic units and/or wind turbines. The providing of the size of the renewable power generating units may in this case include providing the size of the photovoltaic units and/or providing the size of the wind turbines.

The set of inputs further includes a power demand, *i.e.* a demand for a production of power for the power plant. This input may be provided by a user, and the providing of this input may comprise obtaining this input from the power plant operator. The power demand may include a demand for electricity, *e.g.* per unit of time and/or for one or more given time frames. The power demand may further include a demand for heat, *e.g.* per unit of time and/or for a given time frame.

The set of inputs further includes an expected electricity production over time by the renewable power generating units. This input may include times series each representing an expected electricity production hour by hour over a whole year.

When the renewable power generating units comprise photovoltaic units, the expected electricity production over time may include times series each representing an expected solar production hour by hour over a whole year. The providing of the expected solar production over time may include obtaining the expected solar production over time by using a prediction method, such as that given by the well-known PVsyst software, that takes as input past data about the weather at the power plant location (*e.g.* obtained from a database such as SolarGis or Helioscope) and a model of the power plant (*e.g.* obtained from an operator of the power plant) and that outputs a hour by hour prediction of the future production of photovoltaic units of the power plant. This may include feeding to the prediction method the model of the power plant and the past data. The feeding may be preceded by the obtaining of the model (*e.g.* from an operator) and of the past data (*e.g.* from a database such as SolarGis or Helioscope). The model of the power plant may include a number and/or type of equipment (*e.g.* photovoltaic units) of the plant, an orientation of the photovoltaic units, and/or an inclination of the photovoltaic units. The past data may include data about the weather in the past years, *e.g.* for a fixed number of the past years, such as the ten past years, and/or a mean year in terms of solar production, and/or a worst year in terms of solar production.

Additionally or alternatively, when the renewable power generating units comprise wind turbines, the expected electricity production over time may include times series each representing an expected wind production hour by hour over a whole year. The providing of the expected wind production over time may include obtaining the expected wind production over time by using a prediction method, such as the well-known Window Grapher software, that takes as input past data about the weather at the power plant location (*e.g.* obtained from a database) and a model of the power plant (*e.g.* obtained from an operator of the power plant) and that outputs a hour by hour prediction of the future production of wind turbines of the power plant. This may include feeding to the prediction method the model of the power plant and the past data. The feeding may be preceded by the obtaining of the model (*e.g.* from an operator) and of the past data (*e.g.* from a database). The model of the power plant may include a number and/or type of equipment (*e.g.* wind turbines) of the plant, and/or an orientation of the wind turbines. The past data may include data about the weather in the past years, e.g. for a fixed number of the past years, such as the ten past years, and/or a mean year in terms of wind production, and/or a worst year in terms of wind production.

The set of inputs further includes an expected value of temperature of the power plant location over time. The expected value of temperature of the power plant location overtime may include time series each representing an expected value of the temperature our by our at the power plant location during a whole year, e.g. for the same years than those of the expected electricity production over time. The providing of the expected value of temperature of the power plant location overtime may comprise obtaining the expected value of temperature of the power plant location overtime, *e.g.* from a database such as SolarGis or Helioscope.

The set of inputs further includes specifications of the gas turbines, *i.e.* the power generating units that generate thermal power. The specification include a specification of a minimum and maximum production of the gas turbines in operation, a specification representing the gas turbines efficiency as a function of the temperature, a specification representing the gas turbines efficiency as a function of the gas turbines load, and a specification representing a maximal power of the gas turbines as a function of the temperature. Each specification may consist in a curve or in values. For example, the specification representing the gas turbines efficiency as a function of the temperature may be a curve of the gas turbines efficiency as a function of the temperature or a set of values of the gas turbines efficiency as a function of the temperature. The specification representing the gas turbines efficiency as a function of the gas turbines load may be a curve of the gas turbines efficiency as a function of the gas turbines load or a set of values of the gas turbines efficiency as a function of the gas turbines load. The specification representing the maximal power of the gas turbines as a function of the temperature may be a curve of the maximal power of the gas turbines as a function of the temperature or a set of values of the maximal power of the gas turbines as a function of the temperature. The power and efficiency of the gas turbines correspond to a fuel consumption for a given production.

The providing of the specifications of the gas turbines may comprise:

- providing (e.g. by an operator of the power plant):

    ◦ values of the gas turbines efficiency as a function of the temperature,
    ◦ values of the gas turbines efficiency as a function of the gas turbines load, and
    ◦ values of the maximal power of the gas turbines as a function of the temperature; and

- interpolating:

    ◦ the values of the gas turbines efficiency as a function of the temperature,
    ◦ the values of the gas turbines efficiency as a function of the load, and
    ◦ the values of a maximal power of the gas turbines as a function of the temperature.

The interpolation results in that the corresponding specifications are provided as polynomial functions. This allows to have the specifications at each hour.

The providing of the specification of the minimum and maximum production of the gas turbines in operation may comprise defining, by a user, this specification, which may correspond to an operation choice of the plant.

The set of inputs further includes a quantification of a calorific capacity per unit of fuel, *e.g.* a calorific capacity of the plant per ton of fuel. This quantification may be the fuel LHV (Low Heating Value). The providing of this input may comprise obtaining this input from an operator of the power plant.

The set of inputs further includes a quantification of a $CO_2$ emission per unit of fuel, *e.g.* a quantification of a $CO_2$ emission of the plant per ton of fuel. This quantification may be a $CO_2$ factor. The providing of this input may comprise obtaining this input from an operator of the power plant.

The set of inputs further includes a production duration, *e.g.* a duration of power production during which the carbon footprint is to be assessed using the carbon footprint assessing method. The production duration may be a project lifetime, *e.g.* a lifetime of a project of use of the power plant. The providing of the production duration may be carried out by a user, *e.g.* by graphical user interaction (*e.g.* entering the production duration with a keyboard) on a dedicated portion of a graphical user interface of a computer carrying out the carbon footprint assessing method.

The set of inputs further includes an energy dispatch rule, *i.e.* a set of rules of use of the energy within the plant. The providing of the energy dispatch rule may comprise automatically providing a standard/default dispatch rule. The providing of the energy dispatch rule may further comprise modifying, by a user, the default dispatch rule, for example by modifying one or more computation steps and/or functions used in the computing of the respective quantification of the carbon footprint of the power plant for the set of inputs. The default dispatch rule may be that if the size of the gas turbines is too low (*e.g.* their number is to small), they will tend to function at 100% of their capacity, and the renewable power generating units, and optionally batteries, will tend to complete the gas turbines to make the power plant run. This rule decreases $CO_2$ emissions, as $CO_2$ emissions tend to be lesser when the gas turbines function at 100% at their capacity. Therefore in this configuration, the renewable power generating units tend to be used as much as possible. Alternatively, the default rule may be that batteries are loaded in priority by the renewable power generating units.

For each set of inputs, further to the providing of the set of inputs, the carbon footprint assessing method computes, based on the set of inputs, a quantification of the carbon footprint of the power plant. The computation is carried out automatically by a computer system executing the carbon footprint assessing method. For example, a user may launch the computation, *e.g.* by graphical user interaction (*e.g.* click) on a dedicated portion of a graphical user interface of the computer system, and then the computer system performs the computation.

The carbon footprint assessing method then computes the quantification of the carbon footprint based on the provided set of inputs.

The quantification of the carbon footprint is data quantifying the carbon footprint of the power plant for the provided set of inputs, i.e. in the configuration of the power plant that corresponds to the provided set of inputs. The quantification of the carbon footprint may include one or more elements among: a quantification of $CO_2$ emissions, a quantification of fuel consumption, a quantification of curtailment (*i.e.* dissipated renewable energy overproduction), a quantification of the energy supplied by the power plant, and/or a quantification of a size of backup battery size. The carbon footprint assessing method may output one or more of these elements, which form thereby output(s) of the carbon footprint assessing method. The carbon footprint assessing method may for example comprise displaying the output(s).

The computing of the quantification of the carbon footprint may include determining an electrical production of the gas turbines based on the demand for electricity, on the production duration, on the size of the gas turbines, on the expected electricity production over time by the renewable power generating units and on the energy dispatch rule. In other words, the determining of the electrical production of the gas turbines takes as input the demand for electricity, the production duration, the size of the gas turbines, the expected electricity production over time by the renewable power generating units and the energy dispatch rule and outputs an electrical production of the gas turbines, *i.e.* data capturing this electrical production (*e.g.* in the form of one or more values).

Additionally, the computing of the quantification of the carbon footprint may include determining an electrical production of the renewable power generating units based on the demand for electricity, on the production duration, on the size of the renewable power generating units, on the expected electricity production of the renewable power generating units, on the specification of the minimum and maximum production of the gas turbines in operation, and on the energy dispatch rule. In other words, the determining of the electrical production of the renewable generating units takes as input the demand for electricity, the production duration, the size of the renewable power generating units, the expected electricity production of the renewable power generating units, the specification of the minimum and maximum production of the gas turbines in operation, and the energy dispatch rule and outputs an electrical production of the renewable power generating units, *i.e.* data capturing this electrical production (*e.g.* in the form of one or more values).

Additionally, the computing of the quantification of the carbon footprint may include a load of the gas turbines based on the determined electrical production of the gas turbines and on the size of the gas turbines. In other words, the determining takes as input the determined electrical production of the gas turbines and the size of the gas turbines and outputs a load of the gas turbines, *i.e.* data capturing this load (*e.g.* in the form of one or more values).

Additionally, the computing of the quantification of the carbon footprint may include determining an efficiency of the gas turbines based on the expected evolution of temperature, on the determined load of the gas turbines, and on the specifications of the gas turbines. In other words, the determining takes as input the expected evolution of temperature, the determined load of the gas turbines, and the specifications of the gas turbines, and outputs an efficiency of the gas turbines, i.e. data capturing this efficiency (*e.g.* in the form of one or more values). The determining may for example comprise processing the expected evolution of temperature and the determined load of the gas turbines using the specifications, e.g. by using the interpolation of the values of the gas turbines efficiency as a function of the temperature, the interpolation of the values of the gas turbines efficiency as a function of the load, and/or the interpolation of the values of a maximal power of the gas turbines as a function of the temperature. This may include assessing points on the curves (*i.e.* corresponding to the interpolations), an performing a polynomial regressing to determine a polynomial function that passes through the points, the polynomial function providing the efficiency of the gas turbines. In other words, the determining may correspond to the performing of a scientific correlation method.

Additionally, the computing of the quantification of the carbon footprint may include determining a thermal energy produced by the gas turbines based on the determined gas turbines efficiency and on the determined electrical production of the gas turbines. In other words, the determining takes as input the determined gas turbines efficiency and the determined electrical production of the gas turbines, and outputs a thermal energy produced by the gas turbines, *i.e.* data capturing this produced thermal energy (*e.g.* in the form of one or more values).

Additionally, the computing of the quantification of the carbon footprint may include determining a quantification of fuel gas consumption based on the determined thermal energy produced by the gas turbines and on the quantification of the calorific capacity per unit of fuel. In other words, the determining takes as input on the determined thermal energy produced by the gas turbines and the quantification of the calorific capacity per unit of fuel and outputs a quantification of fuel gas consumption, *i.e.* data quantifying the fuel gas consumption (*e.g.* in the form of one or more values).The determined gas consumption may be part of the quantification of the carbon footprint, and may be outputted by the carbon footprint assessing method.

Additionally, the computing of the quantification of the carbon footprint may include determining a quantification of $CO_2$ emission based on the determined quantification of fuel gas consumption, and on the quantification of the $CO_2$ emission per unit of fuel. In other words, the determining takes as input the determined quantification of fuel gas consumption and the quantification of the $CO_2$ emission per unit of fuel, and outputs a quantification of $CO_2$ emission, *i.e.* data quantifying the $CO_2$ emission (*e.g.* in the form of one or more values).The determined $CO_2$ emission may be part of the quantification of the carbon footprint, and may be outputted by the carbon footprint assessing method.

The set of inputs (*i.e.* each set of inputs) may further comprise a size of peak-shifting batteries, a ramp up control of the renewable power generating units, and/or a spinning reserve replacement. In this case, the computing of the quantification of the carbon footprint of the plant further includes:

- updating the size of peak-shifting batteries based on the demand for electricity, on the production duration, on the size the of renewable power generating units, on the expected electricity production of the renewable power generating units, on the size of peak-shifting batteries and on the energy dispatch rule;
- updating the ramp-up control based on the specification representing a maximal power of the gas turbines as a function of the temperature, on a size of the hybrid power plant, on an area of the hybrid power plant, and on an hour where the electrical production is maximal; and/or
- updating the spinning reserve replacement based on the specification representing a maximal power of the gas turbines as a function of the temperature, on a size of the hybrid power plant, on an area of the hybrid power plant, and on an hour where the electrical production by the gas turbines is maximal.

This/these update(s) form a step of determining a battery sizing, the result of the update(s) being the determined battery sizing. The updating of the size of peak-shifting batteries takes as input the demand for electricity, the production duration, the size the of renewable power generating units, the expected electricity production of the renewable power generating units, the size of peak-shifting batteries and the energy dispatch rule and outputs a battery sizing, *i.e.* data quantifying a battery sizing. The updating of the spinning reserve may comprise performing, based on the specification representing a maximal power of the gas turbines as a function of the temperature, on a size of the hybrid power plant, on an area of the hybrid power plant, and on an hour where the electrical production by the gas turbines is maximal, simulations of a loss of a gas turbine to determine a suitable spinning reserve. The updating of the ramp-up control may comprise performing, based on the specification representing a maximal power of the gas turbines as a function of the temperature, on a size of the hybrid power plant, on an area of the hybrid power plant, and on an hour where the electrical production is maximal, a simulation of a cloud passing to determine batteries required to compensate the loss that the passing cloud triggered. The simulation may include a simulation of the dynamical behavior of the plant.

In this case, the determining of the electrical production of the gas turbines is further based on the determined battery sizing (which includes the updated size of peak-shifting batteries, ramp-up control and/or spinning reserve replacement), i.e. the determined battery sizing is a further input of the determining of the electrical production of the gas turbines. Additionally in this case, the determining of the electrical production of the renewable power generating units is further based on the determined battery sizing, i.e. the determined battery sizing is a further input of the determining of the electrical production of the renewable power generating units. Additionally in this case, the computing of the quantification of the carbon footprint of the plant may further include determining an electrical production of the batteries based on the battery sizing.

The determining of the battery sizing may be further based on a sizing of the renewable power generating units, on a cost of the renewable power generating units, and on a battery cost, *i.e.* the sizing of the renewable power generating units, the cost of the renewable power generating units, and the battery cost are further inputs of the determining of the battery sizing. In this case, the carbon footprint assessing method may further comprise computing a CAPEX and an OPEX based on these further inputs.

The demand for power may further include a demand for heat. In this case, the determining of the quantification of the fuel gas consumption is further based on a heat usable by the power plant and on the demand for heat. In other words, the heat usable by the power plant and the demand for heat are further inputs of the determining of the quantification of the fuel gas consumption. The computing of the quantification of the carbon footprint plant may further include determining a heat retrieved by waste heat recovery units based on a specification of the waste hear recovery units. In this case, the determining of the quantification of fuel gas consumption is based on a specification of the auxiliary heat production system (*e.g.* a boiler or a fired heater).

The set of inputs may comprise further inputs, for example a cost of the renewable power generating units (*e. g.* a cost of the photovoltaic units and/or a cost of the wind turbines) and/or a cost of the batteries. The cost of the renewable power generating units and/or of the batteries may reflect the amount of material of these units and/or batteries and/or their manufacturing and/or installation. The inputs may further include a CAPEX, including for example EPC (Engineering, Procurement and Construction) cost for photovoltaic units and/or batteries, and a development cost. The inputs may further include an OPEX, including for example an O&M (Operation and Maintenance) cost for photovoltaic units and/or batteries, and an asset management cost. The inputs may further include a $CO_2$ valorisation. The inputs may further include a fuel price. The inputs may further include a discount rate and/or a tax expense.

The carbon footprint assessing method may further comprise computing an amount of $CO_2$ savings based on the quantification of the carbon footprint. The carbon footprint assessing method may also further comprise computing a cost indicator of a configuration of the plant that allows these $CO_2$ savings. The cost indicator may be referred to as an "NPVO indicator". This allows to calculate yearly and total project expenses and revenues. The NPVO indicator may be calculated using a formula of the type:

$$NPVO = Revenues/savings - CAPEX - OPEX - other\ expenses(e.g.\ taxes)$$

$$= \sum net\ present\ value\ cash\ flow$$

This indicator helps picking a configuration of the power plant which tends to optimize both the CO2 savings and the costs of these savings, said costs reflecting resources and material of renewable power generating units, and/or manufacturing and/or installation. The carbon footprint assessing method may further comprise computing the net technical cost, which has been previously discussed.

Implementations of the carbon footprint assessing method are now discussed.

These implementations provide a model which, based on technical inputs (i.e. the previously discussed set of inputs), allows to compute and deliver a technical behavior of the power plant, and an economical scenarios evaluation and comparison. Furthermore, these implementations may present results in a way that eases efficient decision making. The model is designed to model hybridization of thermal PGU with high renewable penetration (solar, wind and battery).

These implementations uses the inputs listed in table A below, that also includes the sources of the inputs.

*Table A : inputs and sources of the inputs*

| Input | Source |
|---|---|
| Solar production hourly time series | Pvsyst with data from SolarGis or Helioscope |
| On site temperature hourly time series | SolarGis or Helioscope |
| Site demand for power | Site operators |
| Thermal power generating units specifications | PGU constructor and site operator |
| Fuel specifications (LHV and $CO_2$ factor) | Site operator |
| Installed photovoltaic plant size | Any user |
| Battery size for peak-shifting | Any user |
| Project lifetime | Any user |
| Energy dispatch rule | Expert user |

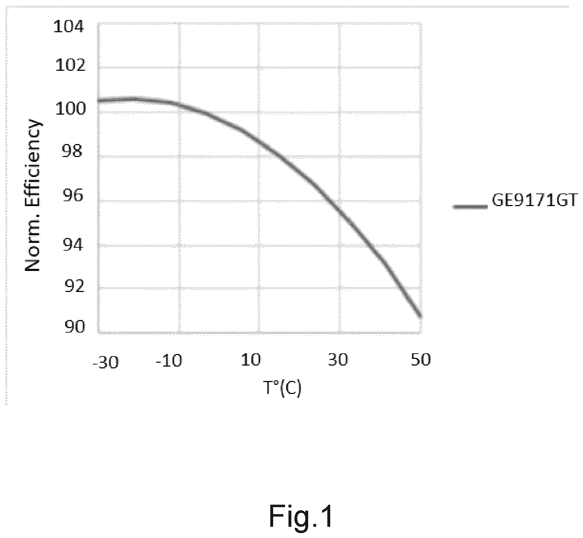

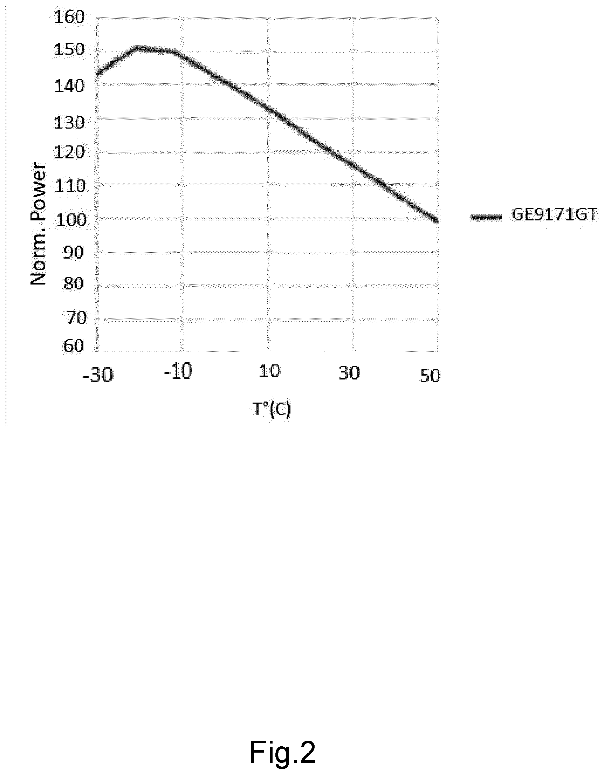

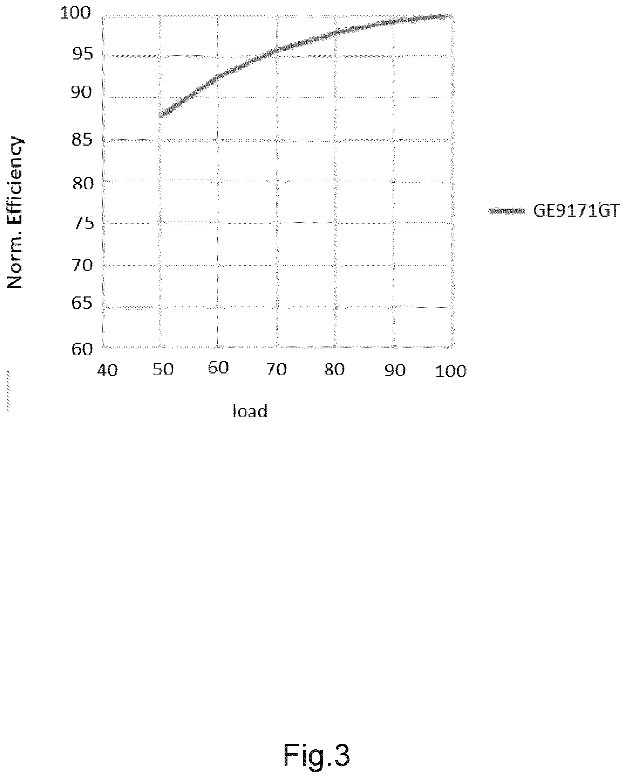

FIG.s 1 to 3 illustrate the specifications of the gas turbines according to implementations of the carbon footprint assessing method. As illustrated on these figures, Gas turbine's performance varies with ambient temperature (as illustrated on FIG. 1, representing efficiency as a function of temperature) and load (power/max power) (as illustrated on FIG. 3, representing efficiency as a function of load). Gas turbines efficiency curves are added to the model to simulate the GT's performance on site which then allows it to calculate fuel consumption. FIG. 2 illustrates the variations of the normalized maximum power with respect to ambient temperature.

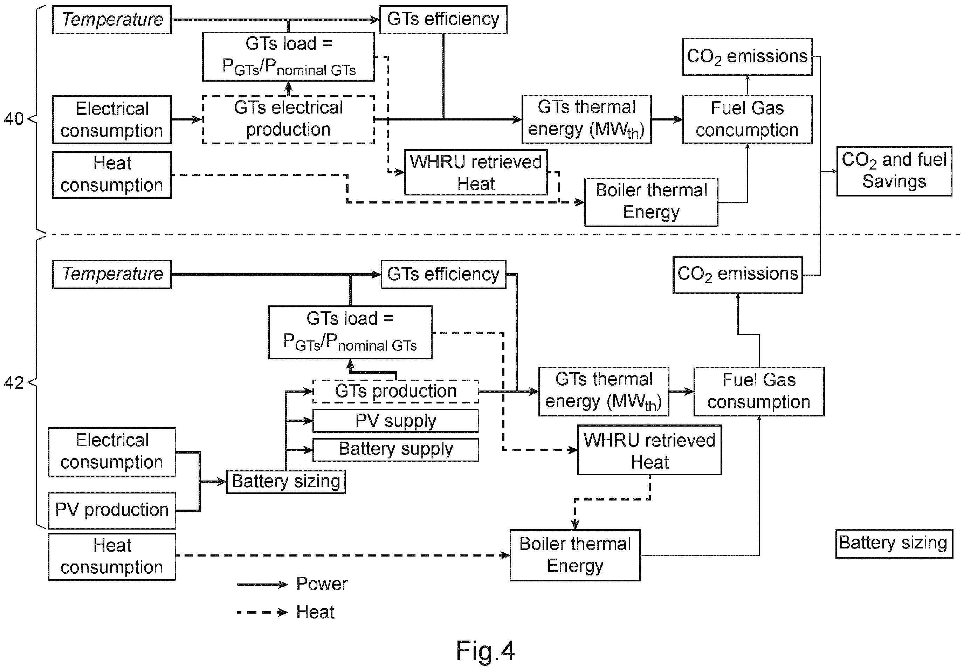

FIG. 4 shows a block diagram illustrating the computing of the quantification of the carbon footprint and of other outputs according to implementations of the carbon footprint assessing method. As shown in FIG. 4, the implementations comprise a base case scenario 40, where photovoltaic production and battery sizing are not taken into account, and another scenario 42, where photovoltaic production and battery sizing are taken into account. Although shown on FIG. 4, the determining of the heat retrieved by waste heat recovery units (WHRU) and the determining of the boiler thermal energy are optional, as discussed hereinabove, and may be absent in examples of scenario 40 or 42. In such a case, the determination of fuel gas consumption is not based on the determined boiler thermal energy.

Formulas used for the computing of the quantification of the carbon footprint according to the block diagram shown on FIG. 4 are now discussed.

In the formulas, the following parameters are used:

- $Efficiency_{GT}$ : efficiency of the gas turbine to convert thermal energy to electrical energy;
- $P_{GT}^{max}$ : maximum production of the gas turbine dependant of on-site conditions;
- $P_{GT}^{min}$ : minimum production of the gas turbine dependant of on-site conditions;
- $N_{GT}$ : number of gas turbines turned on;
- *Fuel LHV Factor:* (Lower heating value) thermal energy dissipated by the combustion of a unit of fuel;
- *Fuel Emission Factor* : amount of $CO_2$ (equivalent) emitted by the combustion of a unit of fuel;
- *Yield Heater* : usable ratio of the thermal energy produced; and
- *WHRU:* Waste heat recovery unit.

For scenario 40, the following formulas are used for power-related computations (shown by full-line arrows on FIG. 4):

$$Electrical\ ProductionGT\ =\ Electrical\ consumption$$

$$=\ N_{GT} * P_{GT}$$

$$load_{GT}\ =\ \frac{P_{GT}}{P_{GT}^{max}}$$

$$Efficiency_{GT}\ =\ f(temperature;\ load_{GT}\ )$$

$$(polynomial\ interpolation\ of\ the\ efficiency$$

$$curves\ provided\ by\ the\ GT's\ constructor)ThermalEnergy_{GT}$$

$$=\frac{Electrical\ production_{GT}}{Efficiency_{GT}^{max}}$$

$$Fuel\ Gas\ Consumption_{GT}\ =\frac{Thermal\ Energy_{GT}}{Fuel\ LHV\ Factor}$$

$$Emission_{GT}\ =\frac{Fuel\ Gas\ Consumption_{GT}}{Fuel\ Emission\ Factor}.$$

Still for scenario 40, the following formulas are used for power-related computations (shown by full-line arrows on FIG. 4):

$$Heat\ Recovered\ by\ WHRU\ =\ N_{GT} * a * load_{GT}^b$$

*(Where a and b are coefficients
provided by the constructor)*

$$Heat\ ProductionHeater\ =\ Heat\ Consumption - Heat\ Recovered\ by\ WHRU$$

$$Thermal\ Energy_{Heater}\ =\ Heat\ Production_{Heater} * Yield\ Heater$$

$$Fuel\ Gas\ Consumption_{Heater}\ =\ \frac{Thermal\ Energy_{Heater}}{Fuel\ LHV\ Factor}$$

$$Emission_{Heater}\ =\ \frac{Fuel\ Gas\ Consumption_{Heater}}{Fuel\ Emission\ Factor}$$

$CO_2$ emissions are computed using the following formulas:

$$Emission_{GT}\ =\ \frac{Fuel\ Gas\ Consumption_{GT}}{Fuel\ Emission\ Factor}$$

$$Emission_{Heater}\ =\ \frac{Fuel\ Gas\ Consumption_{Heater}}{Fuel\ Emission\ Factor}$$

$$Total\ emissions\ =\ Emission_{GT} + Emission_{Heater}.$$

For scenario 42, the following formulas are used for power-related computations (shown by full-line arrows on FIG. 4):

$$Electrical\ Supply_{PV} = Electrical\ Production_{PV} - N_{GT} * P_{GT}^{min}$$

$$Electrical\ Prodiction_{GT} = Electical\ consumption - Electrical\ Supply_{PV}$$

*Batterysizing:* is calculated through a separate second by second simulation through two worst case scenarios where:

-    either PV supply is maximal and undergoes a rapid drop and batteries have to provide the missing power
-    either GT supply is maximal, a GT failure is simulated and batteries have to provide the missing power.

Other formulas are unchanged as compared to scenario 40. For the heat-related computations (shown by dotted-line arrows on FIG. 4), the formulas of scenario 40 are also unchanged. Formulas for the emissions are unchanged. The following additional formula is used:

$$Emissions_{savings}$$
$$= Total\ Emissions\ of\ the\ PV\ and\ batteries\ case\ (scenario\ 42)$$
$$- Total\ Emissions\ of\ the\ base\ case\ (scenario\ 40).$$

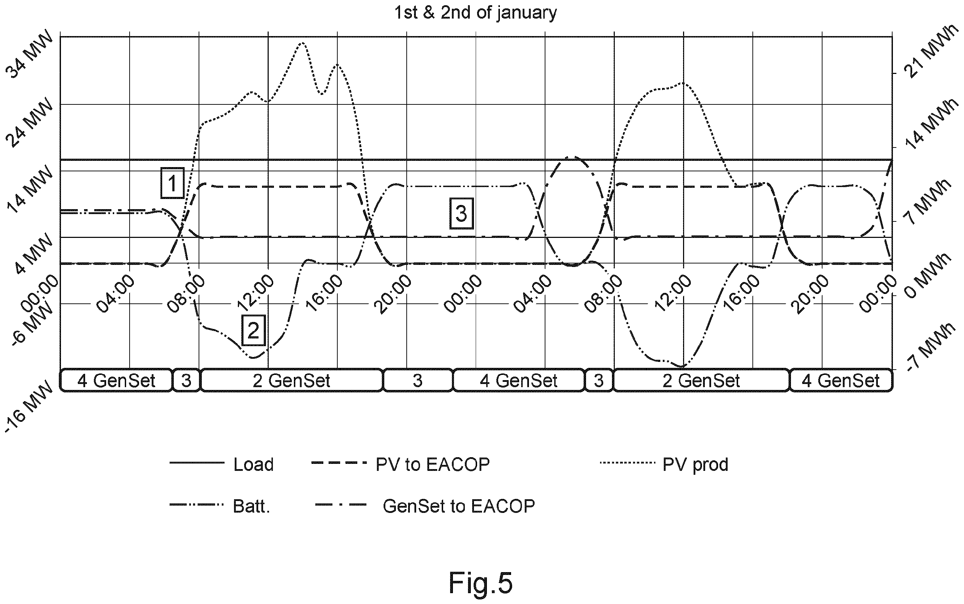

FIG. 5 illustrates PMS (power management system) & EMS (energy management system) to control behavior of different technologies and corresponding energy flux, obtained based on the outputs of implementations of the carbon footprint assessing method. References 1, 2 and 3 illustrate different phenomenon at different time periods. Reference 1 illustrates that PV production lowers GenSets outputs until it reaches minimal production. Reference 2 illustrates that batteries charge during the day with the excess PV production. Reference 3 illustrates that batteries discharge at night.

The outputs in the implementations may comprise a supplied Energy, a curtailment (PV overproduction dissipated), a fuel consumption, a $CO_2$ emission quantification, and a backup battery size. These outputs allow to predict the behavior of the power plant hour by hour during the whole project's lifetime. This allows to simulate $CO_2$ emissions, fuel consumption and renewable electrical production.

The outputs may allow to calculate yearly and total project expenses and revenues. These outputs allows to calculate a NPVO indicator is according to the formula (any other discount rate may be chosen):

$$NPV0 = Revenues/savings - CAPEX - OPEX - other\ expenses\ (e.g.\ taxes)$$

$$(= \sum net\ present\ value\ cash\ flow)$$

This indicator helps picking the most profitable scenarios for a project (net technical cost optimization and NPVO optimization).

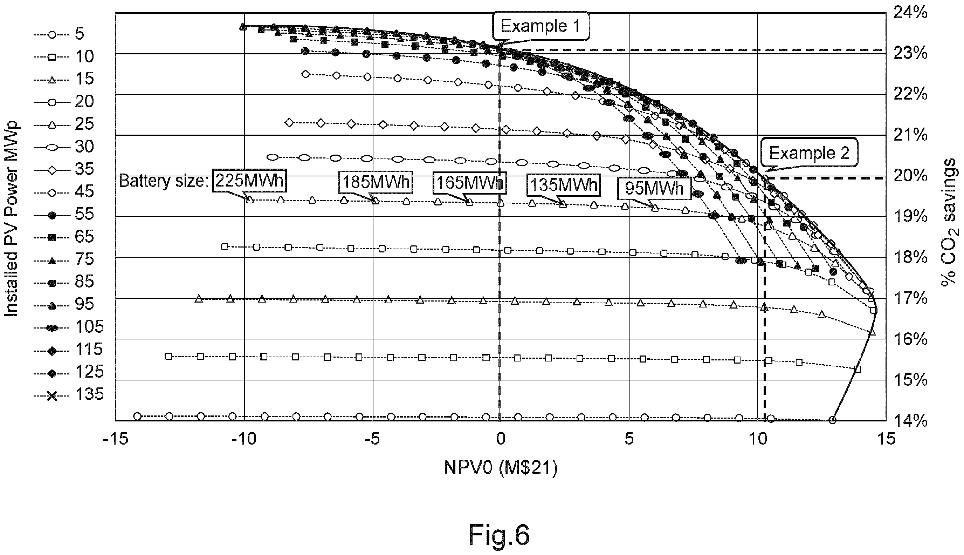

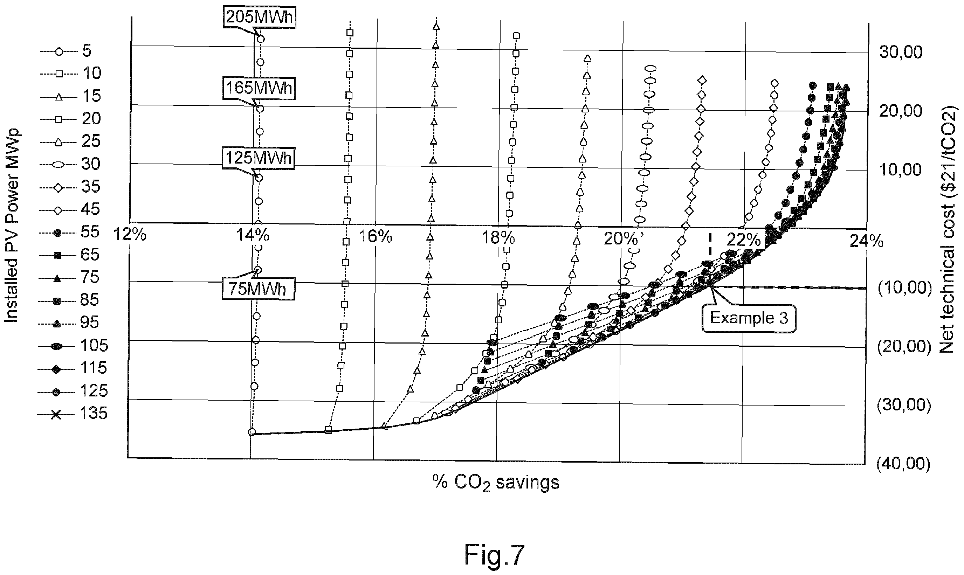

As previously discussed, the carbon footprint assessing method may be used in the design method, which may comprise the display of a curve representing CO2 savings depending on the size of PV (photovoltaic) units and the cost indicator (NPVO). Such curve is shown on FIG. 6. On FIG. 6, example 1 corresponds to the following values: the target is NPVO = 0, for an installation of 85MWp solar farm with 145 MWh battery for peak shifting, and CO2 savings is 23%. On FIG. 6, example 2 corresponds to the following values: the target is 20% CO2 emissions savings, for an installation of 45MWp solar farm with 55 MWh battery for peak shifting, and NPVO is of 10,3 M$21. FIG 7 shows another example of such curve, illustrating optimal scenarios for a given $CO_2$ savings rate. On FIG. 7, example 3 corresponds to the following values: the target is Net technical cost = -10$/t, with (CAPEX + OPEX - Revenues)/ t saved Co2, for an installation of 55MWp solar farm with 85 MWh battery for peak shifting, and 21% CO2 savings.

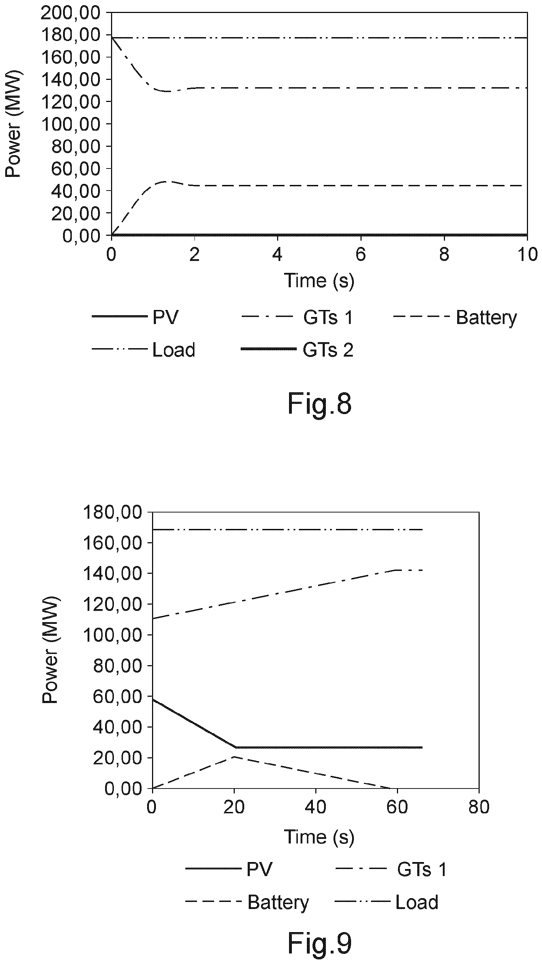

FIG. 8 illustrate a battery sizing scenario. FIG. 8 illustrate the spinning reserve when gas turbine failure occurs. FIG. 8 illustrate the worst case picked when the gas turbines output is maximal (often PV output is null), and a sudden shut down of one of the gas turbines is simulated (sudden loss of power). Phase 1 illustrates batteries compensated overload if maximum load of other gas turbines is reached or maximum ramp up is too little. Phase 2 illustrates batteries compensate this drop until backup or tripped GT is turned on (usually 30 minutes).

FIG. 9 illustrates another battery sizing scenario. FIG. 9 illustrates PV variability due to weather changes. FIG. 9 illustrates the worst case picked when PV production is maximal, this worst case simulating a cloud motion masking the PV plant and generating a 55% reduction of the PV production. Phase 1 illustrates power loss due to the cloud is greater than gas turbines ramp up. Phase 2 illustrates batteries provide the lacking power to ensure stability of the grid.

Both FIG. 8 and FIG. 9 illustrate how batteries are dimensioned to overcome two major problems of the off-grid system. In these illustrations, battery Sizing = max (battery power and energy needed in FIG. 8 and FIG. 9).

The methods are computer-implemented. This means that steps (or substantially all the steps) of the methods are executed by at least one computer, or any system alike. Thus, steps of the methods are performed by the computer, possibly fully automatically, or, semi-automatically. In examples, the triggering of at least some of the steps of the methods may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

FIG. 10 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks; and CD-ROM disks 1040. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the methods. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the methods.

## Claims

1. A computer-implemented method for assessing carbon footprint of a hybrid power plant, the method comprising:

   - providing one or more sets of inputs, each set of inputs including:

     ◦ a size of gas turbines of the power plant,
     ◦ a size of renewable power generating units,
     ◦ a power demand, the power demand including a demand for electricity,
     ◦ an expected electricity production over time by the renewable power generating units,
     ◦ an expected value of temperature of a power plant location over time,
     ◦ specifications of the gas turbines, the specifications including:

       ▪ a specification of a minimum and maximum production of the gas turbines in operation,
       ▪ a specification representing the gas turbines efficiency as a function of the temperature,
       ▪ a specification representing the gas turbines efficiency as a function of the gas turbines load, and
       ▪ a specification representing a maximal power of the gas turbines as a function of the temperature,

     ◦ a quantification of a calorific capacity per unit of fuel,
     ◦ a quantification of a $CO_2$ emission per unit of fuel,
     ◦ a production duration, and
     ◦ an energy dispatch rule; and

   - computing, for each set of inputs, automatically by a computer system and based on the set of inputs, a respective quantification of a carbon footprint of the power plant.

2. The method of claim 1, wherein the computing of the quantification of the carbon footprint of the plant includes:

   - determining an electrical production of the gas turbines based on the demand for electricity, on the production duration, on the size of the gas turbines, on the expected electricity production over time by the renewable power generating units and on the energy dispatch rule;
   - determining an electrical production of the renewable power generating units based on the demand for electricity, on the production duration, on the size of the renewable power generating units, on the expected electricity production of the renewable power generating units, on the specification of the minimum and maximum production of the gas turbines in operation, and on the energy dispatch rule;
- determining a load of the gas turbines based on the determined electrical production of the gas turbines and on the size of the gas turbines;
- determining an efficiency of the gas turbines based on the expected evolution of temperature, on the determined load of the gas turbines, and on the specifications of the gas turbines;
- determining a thermal energy produced by the gas turbines based on the determined gas turbines efficiency and on the determined electrical production of the gas turbines;
- determining a quantification of fuel gas consumption based on the determined thermal energy produced by the gas turbines and on the quantification of the calorific capacity per unit of fuel;
- determining a quantification of $CO_2$ emission based on the determined quantification of fuel gas consumption, and on the quantification of the $CO_2$ emission per unit of fuel.

3. The method of claim 2, wherein the set of inputs further comprise:

◦ a size of peak-shifting batteries,
◦ a ramp up control of the renewable power generating units, and/or
◦ a spinning reserve replacement,

and the computing of the quantification of the carbon footprint of the plant further includes:

- updating the size of peak-shifting batteries based on the demand for electricity, on the production duration, on the size the of renewable power generating units, on the expected electricity production of the renewable power generating units, on the size of peak-shifting batteries and on the energy dispatch rule;
- updating the ramp-up control based on the specification representing a maximal power of the gas turbines as a function of the temperature, on a size of the hybrid power plant, on an area of the hybrid power plant, and on an hour where the electrical production is maximal; and/or
- updating the spinning reserve replacement based on the specification representing a maximal power of the gas turbines as a function of the temperature, on a size of the hybrid power plant, on an area of the hybrid power plant, and on an hour where the electrical production by the gas turbines is maximal,

the determining of the electrical production of the gas turbines being further based on the determined battery sizing, the determining of the electrical production of the renewable power generating units being further based on the determined battery sizing.

4. The method of claim 3, wherein the computing of the quantification of the carbon footprint of the plant further includes:

- determining an electrical production of the batteries based on the battery sizing.

5. The method of claim any one of claims 2 to 4, wherein the demand for power further includes a demand for heat, and the determining of the quantification of the fuel gas consumption is further based on a heat usable by the power plant and on the demand for heat.

6. The method of claim 5, wherein the computing of the quantification of the carbon footprint of the plant further includes:

- determining a heat retrieved by waste heat recovery units based on a specification of the waste hear recovery units,

the determining of the quantification of fuel gas consumption being based on a specification of the auxiliary heat production system,
wherein optionally the computing of the quantification of the carbon footprint of the plant further includes:

- determining an auxiliary heat production system thermal energy based on the determined heat retrieved by waste heat recovery units and on the demand for heat,

the determining of the quantification of fuel gas consumption being based on the determined auxiliary heat production system thermal energy.

7. The method of any one of claims 1 to 6, wherein the providing of the specifications of the gas turbines comprises:

- providing:

  ◦ values of the gas turbines efficiency as a function of the temperature,
  ◦ values of the gas turbines efficiency as a function of the gas turbines load, and
  ◦ values of the maximal power of the gas turbines as a function of the temperature; and

- interpolating:

  ◦ the values of the gas turbines efficiency as a function of the temperature,
  ◦ the values of the gas turbines efficiency as a function of the load, and
  ◦ the values of a maximal power of the gas turbines as a function of the temperature.

8. The method of any one of claims 1 to 7, wherein the renewable power generating units include:

  - photovoltaic units, and/or
  - wind turbines.

9. The method of any one of claims 1 to 8, wherein the one or more sets of inputs consist in several sets of inputs.

10. A computer implemented method for upgrading a real-world power plant, the method comprising:

  - performing the method of claim 9, thereby computing respective quantifications of the carbon footprint of the power plant each for a respective set of inputs; and
  - determining, based on each computed respective quantification of the carbon footprint of the power plant, one or more renewable power generating units to be integrated each on a respective fossil power generating unit of the power plant and/or an improvement of one or more existing renewable power generating units of the power plant,

  wherein optionally the method further comprises, in the real-world hybrid power plant:

  - integrating the determined one or more renewable power generating units each on a respective fossil power generating unit; and/or
  - performing the improvement of the one or more existing renewable power generating units of the power plant.

11. A computer-implemented method for designing a hybrid power plant comprising gas turbines and renewable power generating units, the method comprising:

  - performing the method of claim 9, thereby computing respective quantifications of the carbon footprint of the power plant each for a respective set of inputs; and
  - determining a size of the renewable power generating units of the power plant and/or a size of the gas turbines of the power plant based on each computed respective quantification of the carbon footprint of the power plant and on a net technical cost.

12. The method of claim 11, wherein:

  - the method further comprises:

    ◦ determining, based on each computed respective quantification of the carbon footprint of the power plant and on the net technical cost, a graph representing $CO_2$ savings depending on the size of the renewable power generating units and on the net technical cost; and
    ◦ displaying the graph,

  the determining of the size of the renewable power generating units of the power plant and/or a size of the gas turbines of the power plant being based on the graph,
  wherein optionally the determining of the size of the renewable power generating units of the power plant and/or the size of the gas turbines of the power plant comprises selecting, by a user, a point of the graph, or
  - the determining of the size of the renewable power generating units of the power plant and/or a size of the gas turbines of the power plant comprises:

   ∘ automatically by a computer system, selecting, based on each computed respective quantification of the carbon footprint of the power plant, on the net technical cost, and on a criterion of maximization of $CO_2$ savings, an optimal size of the renewable power generating units of the power plant and/or an optimal size of the gas turbines of the power plant.

13. A computer program comprising instructions for performing the method of any one of claims 1 to 9 and/or the method of claim 10 and/or the method of any one of claims 11 to 12.

14. A device comprising a computer-readable data storage medium having recorded thereon the computer program of claim 13.

15. The device of claim 14, wherein the device further comprises a processor coupled to the data storage medium.

Fig.1

Fig.2

Fig.3

Fig.4

1st & 2nd of january

Fig.5

Fig.6

Fig.7

Fig.8

Fig.9

Fig.10

Europäisches
Patentamt

European
Patent Office

Office européen
des brevets

## EUROPEAN SEARCH REPORT

Application Number

EP 21 30 5780

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | RIBOLDI LUCA ET AL: "Optimal Design of a Hybrid Energy System for the Supply of Clean and Stable Energy to Offshore Installations", FRONTIERS IN ENERGY RESEARCH, vol. 8, 23 December 2020 (2020-12-23), XP055858215, DOI: 10.3389/fenrg.2020.607284 Retrieved from the Internet: URL:http://dx.doi.org/10.3389/fenrg.2020.607284> [retrieved on 2021-11-05] * the whole document * | 1-15 | INV. H02J3/38 |
| Y | Lebele-Alawa and Jo-Appah: "Thermodynamic Performance Analysis of a Gas Turbine in an Equatorial Rain Forest Environment", Journal of Power Engineering, vol. 3, no. 11-23 January 2015 (2015-01), XP002804703, Retrieved from the Internet: URL:https://www.scirp.org/pdf/JPEE_2015010910334938.pdf [retrieved on 2021-11-05] * the whole document * | 1-15 | |
| A | WADHAH HUSSEIN ABDUL RAZZAQ AL- DOORI: "Parametric Performance of Gas Turbine Power Plant with Effect Intercooler", MODERN APPLIED SCIENCE, vol. 5, no. 3, 2 June 2011 (2011-06-02), XP055097194, ISSN: 1913-1844, DOI: 10.5539/mas.v5n3p173 * figure 14 * | 1-15 | TECHNICAL FIELDS SEARCHED (IPC) H02J |

-----

-----

-----

-/--

The present search report has been drawn up for all claims

| Place of search | Date of completion of the search | Examiner |
|---|---|---|
| Munich | 17 November 2021 | Annibal, Stewart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 21 30 5780

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ABDALLAH H ET AL: "THERMODYNAMIC ANALYSIS OF CHEMICALLY RECUPERATED GAS TURBINES", REVUE GENERALE DE THERMIQUE, ELSEVIER EDITIONS SCIENTIFIQUES ET MEDICALES,PARIS, FR, vol. 40, no. 4, 1 April 2001 (2001-04-01), pages 372-384, XP001009148, ISSN: 0035-3159 * figure 7 * | 1-15 | |
| A | "LM2500+ Marine Gas Turbine", , February 2017 (2017-02), XP002804704, Retrieved from the Internet: URL:https://www.geaviation.com/sites/defau lt/files/datasheet-lm2500plus.pdf [retrieved on 2021-11-05] * the whole document * | 1-15 | |
| A | "LM6000 Marine Gas Turbine", , February 2017 (2017-02), XP002804705, Retrieved from the Internet: URL:https://www.geaviation.com/sites/defau lt/files/datasheet-lm6000.pdf [retrieved on 2021-11-05] * the whole document * | 1-15 | |

TECHNICAL FIELDS
SEARCHED (IPC)

-/--

The present search report has been drawn up for all claims

| Place of search | Date of completion of the search | Examiner |
|---|---|---|
| Munich | 17 November 2021 | Annibal, Stewart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

| | Europäisches Patentamt European Patent Office Office européen des brevets | **EUROPEAN SEARCH REPORT** | Application Number EP 21 30 5780 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BORTOLINI MARCO ET AL: "Economic and environmental bi-objective design of an off-grid photovoltaic-battery-diesel generator hybrid energy system", ENERGY CONVERSION AND MANAGEMENT, vol. 106, 1 December 2015 (2015-12-01), pages 1024-1038, XP055858152, GB ISSN: 0196-8904, DOI: 10.1016/j.enconman.2015.10.051 Retrieved from the Internet: URL:https://www.sciencedirect.com/science/article/pii/S0196890415009735/pdfft?md5=09e4fc81b14613f6454de04cd6f951f6&pid=1-s2.0-S0196890415009735-main.pdf> [retrieved on 2021-11-05] * the whole document * ----- | 1-15 | |

TECHNICAL FIELDS SEARCHED (IPC)

The present search report has been drawn up for all claims

| Place of search | Date of completion of the search | Examiner |
|---|---|---|
| Munich | 17 November 2021 | Annibal, Stewart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)